# EUROPEAN PATENT APPLICATION

(11) **EP 1 396 284 A1**
(43) Date of publication of application: **10.03.2004**
(21) Application number: 03017034.4
(22) Date of filing: 28.07.2003
(51) Int. Cl.: B01D 46/18, B01D 46/22

(54) **Apparatus for the purification of smoke, vapours and other pollutants in suspension**

(30) Priority: 05.08.2002 IT VI20020177
(71) Applicant: Industrie Meccaniche Bergi-OFB S.p.A., 36071 Arzignano (Vicenza) (IT)
(72) Inventor: Bergozza, Giovanni, 36071 Arzignano (Vicenza) (IT)
(74) Representative: Bettello, Pietro, Dott. Ing.

(57) **Abstract**

The present document relates to an apparatus for the purification of smoke, vapours and other pollutants in suspension, to attach onto a tannery machine and working on the principle of the so called "dry scrubbing". This apparatus is characterised in that the employment of a filtering wall placed in front of the suction mouth, which connects the polluted environment of the working machine with the suction chamber.

## Description

The present finding relates to an apparatus for the purification of smoke, fumes and other pollutants in suspension, to attach onto tannery machines.

It is well known that in the manufacturing of tanning hides polluting fluids are produced that must be quickly evacuated from the work environment, to ensure the safety of the workers.

The polluting fluid, aspirated from the manufacturing machinery, are therefore exposed to a purification treatment before being discharged into the atmosphere.

Presently the purification method for polluting fluids is achieved principally by means of the so called "water scrubbing".

This work unit, which emerges from a notable encumbrance and composed of washing tanks and filters, is normally placed far from the leather manufacturing section, for which the overhead air conveying piping of the exhausted fluids is essential, which can extend, in a average factory, even for up to tens of metres.

An inconvenience that this type of apparatus manifests, other than an elevated production cost, is represented in the danger of the overhead piping, a vaporised mixture of oily substances and flammable chemical products passing there through, which are subject to blocking and, in the worst case, the possibility of a fire and possible explosions.

This implies that, to guaranty the safety of the work area crossed by the overhead air conveying piping, it is necessary to continue, constant and careful maintenance work of the entire network, which however requires specialised workers and the machines to be switched off, with easily predictable economical consequences.

The objective of the present finding is to provide an apparatus for the purification of smoke, fumes and other pollutants in suspension in an air mixture, which works with the principle of the so called "dry scrubbing" and that does not require the use of conveyance, being attached directly onto the single working machine.

A further objective of the finding is to provide an apparatus with results of easy production and low cost.

A further objective of the finding is to produce an apparatus that is attached to the normal production tannery machine without it being necessary to modify the same machine.

A further objective of the finding is to produce a purification apparatus that requires minimum maintenance and that reduces working costs.

These objectives are obtained by providing the employment of a filtering wall that is placed in front of the suction mouth that connects the polluted environment of the working machine with the suction chamber.

The finding provides furthermore that the said filtering wall is comprised of mobile filtering elements, in order to continuously have a clean portion available, to guaranty the maximum performance of the filter.

The finding will be best defined by means of a description of one of its possible embodiment, given as an example only, not limiting, with the help of the attached designs, where:
* Fig.1 represents an elevated, front view of a sprinkler, equipped of the apparatus of the finding
* Fig.2 represents a detailed view of the suction mouth;

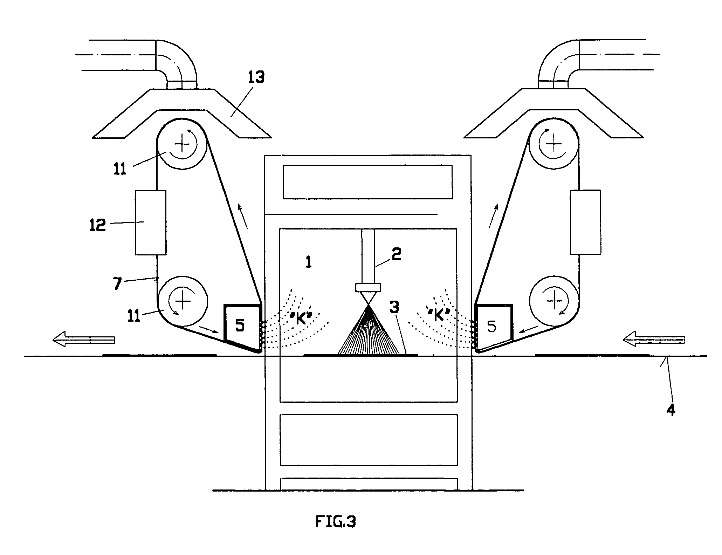

* Fig.3 represents a structural variant of the apparatus of the finding.

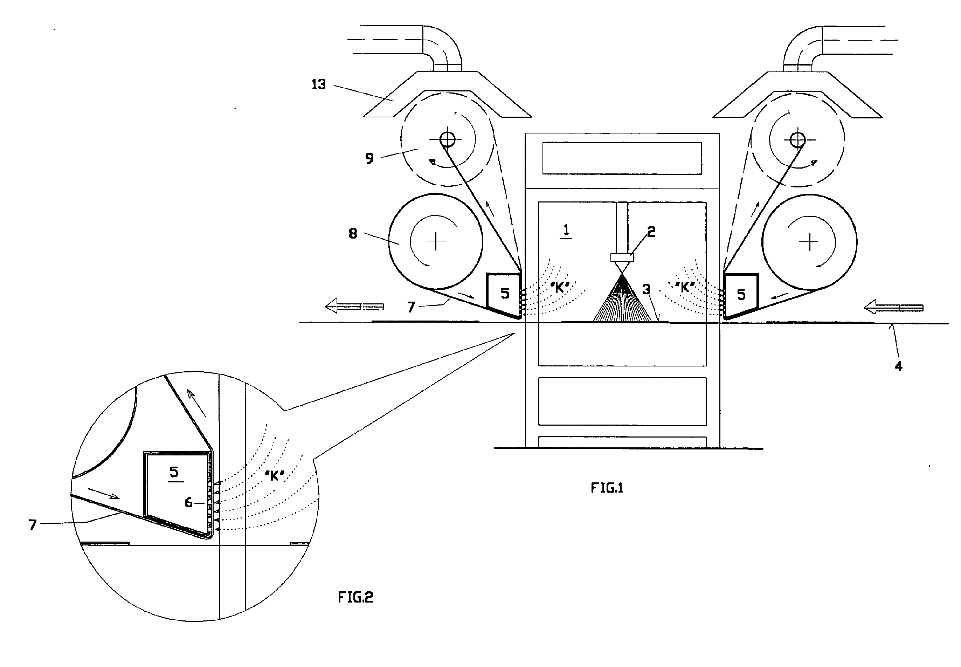

As can be seen in fig.1, a sprinkler machine, used for the deposition on the leather of one or more layers of colouring products and fixing products, comprising substantially of a sprinkler cabinet 1 equipped with nozzles 2 that shower the vaporised products on the surface of the leather 3, transported from the conveyor belt 4.

The polluted fluid that forms inside the sprinkler cabinet, comprised of an air mix, organic and inorganic dripping material and other chemical substances in suspension, schematically represented by the arrow "K", is sucked, through some suction chambers 5, deposited laterally to it.

The innovative characteristic of the finding consists in that in front of the suction mouth 6, which connects the sprinkler cabinet 1 with the suction chamber 5, a filtering cloth 7 of suitable material is produced, which retains the polluted particles, in order to purify to the air so that it maybe exhausted directly to the outside.

A further characteristic provides that the filtering cloth 7 is susceptible to slide, with intermittent or continuous motion, so that a clean piece of filtering surface is always present in front of the suction mouth.

A further characteristic provides that the filtering cloth 7 is attached to two coils; a first coil 8, placed upstream from the suction mouth, from which it uncoils the clean filtering cloth and a second coil 9, placed downstream from the said mouth, onto which the cloth impregnated by the purified pollutant is rolled up.

The operational advantages of the apparatus according to the finding, clearly seen in fig.1, are: the possibility to control the purification capacity of the cloth, defined by the length time that it remains in front of the suction mouth, simply varying the rotation speed of the two coils and the operational cost, because, when the second coil is completely rolled up with the dirty cloth, it is detached from the apparatus and can be washed for its reuse.

A structural variant provides that the filtering sheet 7 is shaped like a sleeve 10, to hollow section, placed sliding from the motor rollers 11 and provided with a cleaning device 12.

The apparatus is completed by a suction hood 13, which enables the suction of possible dust and smoke in order to keep the external environment of the sprinkler machine clean.

There are obviously possible different embodiments of that described, in view of the defined structural details, without, for this reason, departing from the scope of the following claims.

## Claims

1. APPARATUS FOR THE PURIFICATION OF SMOKE, VAPOURS AND OTHER POLLUTANTS IN SUSPENSION, to attach onto tannery machines and working according to the principle of the so called "dry scrubbing", **characterised in that** the providing of a filtering wall that is placed in front of the suction mouth, which connects the polluted environment of the working machine with the suction chamber.

2. APPARATUS, according to claim 1, **characterised in that** the filtering wall is comprised of mobile filtering elements, in order to continuously have a clean filtering portion.

3. APPARATUS, according to claims 1 or 2, attached to a sprinkler machine used to deposit on the leather one or more layers of colouring and fixing products substantially including a sprinkler cabinet (1), equipped with nozzles (2), which shower the spray products onto the surface of the leather (3), transported from the conveyor belt (4), being provided that the polluted fluid (K) that forms inside said sprinkler cabinet and comprised of an air mix, organic and inorganic dripping material and other chemical substances in suspension, being sucked, through some suction chambers (5), deposited laterally to it,
said apparatus **characterising in that**
providing in front of the suction mouth (6), which connects the sprinkler cabinet (1) with the suction chamber (5), the attachment of a filtering cloth (7), of suitable material, which has the objective to retain the polluted particles present in the suction flow (K).

4. APPARATUS, according to claim 3, **characterised in that** the filtering cloth (7) is susceptible to a sliding, intermittent or continuous, so that a clean portion of filtering surface always produced in front of the suction mouth (6),

5. APPARATUS, according to claim 3 or 4, **characterised in that** the filtering cloth (7) is engaged with two coils; a first coil (8), placed upstream from the suction mouth, from which the clean filtering cloth uncoils and a second coil (9), placed downstream from the said mouth, onto which the cloth impregnated by the purified pollutant is rolled up.

6. APPARATUS, according to claim 3 or 4, **characterised in that** the filtering cloth (7) is shaped like a sleeve (10), to hollow section, placed sliding from the motor rollers (11) and provided with a cleaning device (12).

7. APPARATUS, according to one or more of the claims from 3 to 6, **characterised in that** it provides a suction hood (13) enabling the suction of possible dust and smoke present in the external environment of the sprinkler machine.
